(19) Europäisches Patentamt
European Patent Office
Office européen des brevets

(11)  **EP 1 970 691 B1**

(12)  **FASCICULE DE BREVET EUROPEEN**

(45) Date de publication et mention
de la délivrance du brevet:
**25.05.2011  Bulletin 2011/21**

(51) Int Cl.:
***G01M 13/04*** *(2006.01)*

(21) Numéro de dépôt: **08102508.2**

(22) Date de dépôt: **11.03.2008**

(54) **Procédé de détection d'un endommagement d'un roulement de palier d'un moteur**

Verfahren zur Erkennung einer Beschädigung des Wälzlagers eines Motors

Method of detecting damage to an antifriction bearing of a motor

(84) Etats contractants désignés:
**DE FR GB SE**

(30) Priorité: **12.03.2007  FR 0753755**

(43) Date de publication de la demande:
**17.09.2008  Bulletin 2008/38**

(73) Titulaire: **SNECMA**
**75015 Paris (FR)**

(72) Inventeurs:
 • **Blanchard, Serge**
 **77000, MELUN (FR)**
 • **Griffaton, Julien**
 **75003, PARIS (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A- 1 111 364      WO-A-02/089305**
**DE-A1- 19 702 234**

**Description**

Arrière-plan de l'invention

La présente invention se rapporte au domaine général de la surveillance de l'usure d'un roulement de palier supportant en rotation au moins un arbre rotatif d'un moteur, par exemple d'un roulement de palier inter-arbres d'une turbomachine aéronautique.

Les paliers à roulement (à billes ou à rouleaux) sont couramment utilisés dans le domaine aéronautique, notamment pour supporter en rotation les arbres des corps haute et basse pression d'une turbomachine.

L'usure des roulements des paliers d'une turbomachine doit être surveillée pour détecter de façon précoce un éventuel endommagement d'un roulement et ainsi anticiper une rupture ou un dysfonctionnement sérieux du palier.

L'un des procédés connus de surveillance de l'usure d'un roulement de palier de turbomachine se base sur le principe selon lequel la fréquence résultant de l'endommagement du roulement est proportionnelle à la vitesse de rotation de l'arbre ou des arbres supportés par le palier et que cette fréquence se propage par vibrations aux travers des composants de la turbomachine. Aussi, ce procédé consiste à réaliser une recherche de niveaux vibratoires des composants de la turbomachine à haut régime de fonctionnement de celle-ci. Pour ce faire, ce procédé prévoit d'acquérir au cours d'un cycle complet de vol un signal vibratoire issu d'un ou plusieurs capteurs de vibration qui peuvent détecter des vibrations en provenance des composants de la turbomachine. La détection d'un endommagement d'un roulement du palier est alors réalisée à partir de l'identification de niveaux vibratoires supérieurs à un seuil prédéfini pour un roulement sain et pour lesquels on a identifié un même facteur. On pourra par exemple se référer à la demande de brevet européen EP 1 111 364 qui décrit un mode de réalisation d'un tel procédé.

Cependant, des essais avec des roulements endommagés de paliers ont montré que la détection d'un endommagement n'est pas systématique avec une telle méthode. En effet, les mesures des capteurs de vibration sont « polluées » à haut régime de fonctionnement de la turbomachine par un environnement vibratoire naturel (bruit de combustion, bruit provoqué par l'écoulement aérodynamique, nombreuses harmoniques des régimes de rotation des arbres haute et basse pression, etc.) ce qui rend difficilement discernables les niveaux vibratoires caractéristiques d'un endommagement.

Les documents WO 02/089 305 et DE 197 02 234 décrivent des procédés de surveillance de palier à roulement.

Objet et résumé de l'invention

La présente invention a donc pour but principal de pallier de tels inconvénients en proposant un procédé permettant de détecter de façon fiable l'endommagement d'un roulement de palier supportant en rotation au moins un arbre rotatif d'un moteur.

Conformément à l'invention, ce but est atteint grâce à un procédé consistant à :

a) définir une période de mesure correspondant à un intervalle de régimes de rotation de l'arbre pendant une activité renouvelable à bas régime de fonctionnement du moteur ;

b) acquérir sur l'ensemble de la période de mesure un signal vibratoire d'accélération de composants du moteur ;

c) échantillonner le signal vibratoire en fonction du régime de rotation de l'arbre pendant la période de mesure ;

d) transformer le signal vibratoire échantillonné en un signal fréquentiel pour obtenir des raies spectrales fréquentielles ordonnées selon le régime de rotation de l'arbre ;

e) calculer la moyenne temporelle des amplitudes des raies spectrales sur la période de mesure;

f) déterminer des pics d'amplitude autour de multiples de la fréquence théorique d'un rouleau endommagé ;

g) calculer le rapport entre chaque pic d'amplitude et le niveau d'amplitude déterminé pour un roulement sain ; et

h) comparer le rapport obtenu à au moins un seuil d'endommagement prédéterminé.

Le procédé selon l'invention est remarquable notamment en ce qu'il prévoit l'acquisition et le traitement du signal vibratoire pendant une activité renouvelable à bas régime de fonctionnement du moteur. Ainsi, l'environnement vibratoire est moins pollué par le bruit (dans le cas d'une turbomachine par exemple, il y a peu de bruit lié à la combustion et à l'écoulement aérodynamique) ce qui accroît la fiabilité de la détection. Par ailleurs, il a été constaté qu'à bas régime de fonctionnement du moteur, les fréquences théoriques caractéristiques d'un endommagement d'un roulement sont plus basses qu'à haut régime ce qui signifie que l'on peut observer un plus grand nombre d'indicateurs d'endommagement d'un roulement à bas régime qu'à haut régime. De la sorte, l'endommagement d'un roulement peut être détecté de façon particulièrement précoce.

Selon une caractéristique avantageuse de l'invention, l'étape h) consiste à comparer le rapport obtenu à un seuil bas d'endommagement et, si le rapport est supérieur au seuil bas, à le comparer à un seuil haut d'endommagement de façon à déterminer le degré d'endommagement éventuel du roulement.

L'activité renouvelable à bas régime de fonctionnement du moteur qui est choisie pour définir la période de mesure peut correspondre à la phase de démarrage ou à la phase d'arrêt du moteur. Les phases de démarrage et d'arrêt correspondent en effet à un bas régime de fonctionnement du moteur et sont renouvelables. En particulier, l'application du procédé selon l'invention pendant la phase d'arrêt ou de démarrage d'une turbomachine présente de nombreux avantages additionnels : le jeu du palier a tendance à se resserrer pendant ces phases ce qui accroît les manifestations d'un endommagement du roulement et facilite donc sa détection ; et la mise en oeuvre du procédé peut être appliquée à faible coût sur demande par exemple en lançant un démarrage avorté de la turbomachine.

Le procédé selon l'invention peut s'appliquer au cas d'un palier à roulement qui supporte en rotation deux arbres rotatifs du moteur. Dans ce cas, la période de mesure correspond à un intervalle de régimes de rotation de l'un des deux arbres pendant l'activité à bas régime de fonctionnement du moteur, et le signal vibratoire est échantillonné en fonction de la différence de régimes de rotation des deux arbres pendant la période de mesure.

L'étape f) du procédé selon l'invention peut consister à déterminer des pics d'amplitude autour de multiples entiers et pairs de la fréquence théorique d'un rouleau endommagé.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est un schéma montrant les différentes étapes d'un mode de réalisation d'un procédé conforme à l'invention ;
- la figure 2 est un organigramme montrant les différentes étapes d'un procédé conforme à l'invention appliqué à la détection d'un endommagement d'un roulement de palier inter-arbres d'une turbomachine aéronautique ; et
- les figures 3 à 6A-6C sont des schémas montrant des exemples d'application de l'organigramme de la figure 2.

Description détaillée d'un mode de réalisation

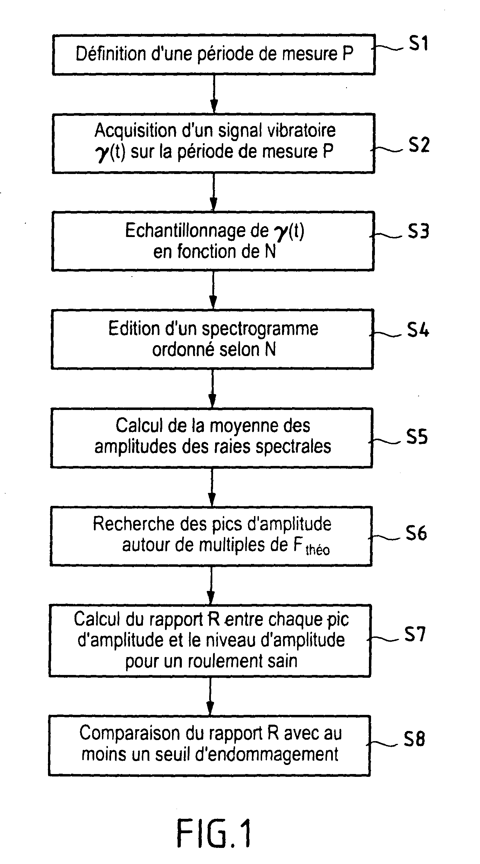

On se réfère à la figure 1 qui montre les étapes constitutives d'un procédé conforme à l'invention pour la détection d'un endommagement d'un roulement de palier supportant en rotation au moins un arbre rotatif d'un moteur.

De manière générale, l'invention s'applique à tout type de moteur qui possède au moins un arbre rotatif et au moins un palier à roulement et qui présente une activité renouvelable à bas régime (phase de démarrage, phase d'arrêt, ralenti, cycle à bas régime, etc.). Parmi ces moteurs, on peut citer par exemple les moteurs à turbine à gaz d'avion (appelés turbomachines) ou d'hélicoptère, les turbines à gaz terrestres, les boîtiers d'engrenages, les moteurs à essieux, etc.

Le principe sur lequel se base l'invention est que la fréquence résultant de l'endommagement du roulement est proportionnelle à la vitesse de rotation de l'arbre rotatif supporté par le palier. L'hypothèse est que cette fréquence va se transmettre à un capteur d'accélération au travers de composants du moteur eux-mêmes vibrants, en particulier aux fréquences fondamentales.

Une première étape (S1) du procédé conforme à l'invention consiste à définir une période de mesure P correspondant à un intervalle de régimes de rotation N de l'arbre pendant l'activité renouvelable à bas régime de fonctionnement du moteur.

L'étape suivante (S2) consiste à acquérir sur l'ensemble de la période de mesure P un signal vibratoire $\gamma(t)$ d'accélération de composants du moteur. Un tel signal provient d'un capteur d'accélération (par exemple un accéléromètre ou une jauge de contrainte) préalablement placé sur un composant fixe du moteur.

Le signal vibratoire $\gamma(t)$ est ensuite échantillonné en fonction du régime de rotation N de l'arbre pendant la période de mesure P au cours d'une étape S3.

L'étape suivante (S4) consiste à transformer le signal vibratoire échantillonné en un signal fréquentiel pour obtenir des raies spectrales fréquentielles ordonnées selon le régime de rotation N de l'arbre, ce qui correspond à éditer un spectrogramme ordonné selon N.

La moyenne temporelle des amplitudes des raies spectrales est alors calculée (étape S5) et les pics d'amplitude qui sont situés autour de multiples de la fréquence théorique $F_{théo}$ d'un rouleau endommagé sont recherchés (étape S6).

Le rapport R entre chaque pic d'amplitude et le niveau d'amplitude déterminé pour un roulement sain est alors calculé (étape S7) pour être comparé à au moins un seuil d'endommagement prédéterminé (étape S8). En fonction du résultat de cette comparaison, il est possible d'indiquer si le roulement est endommagé ou sain.

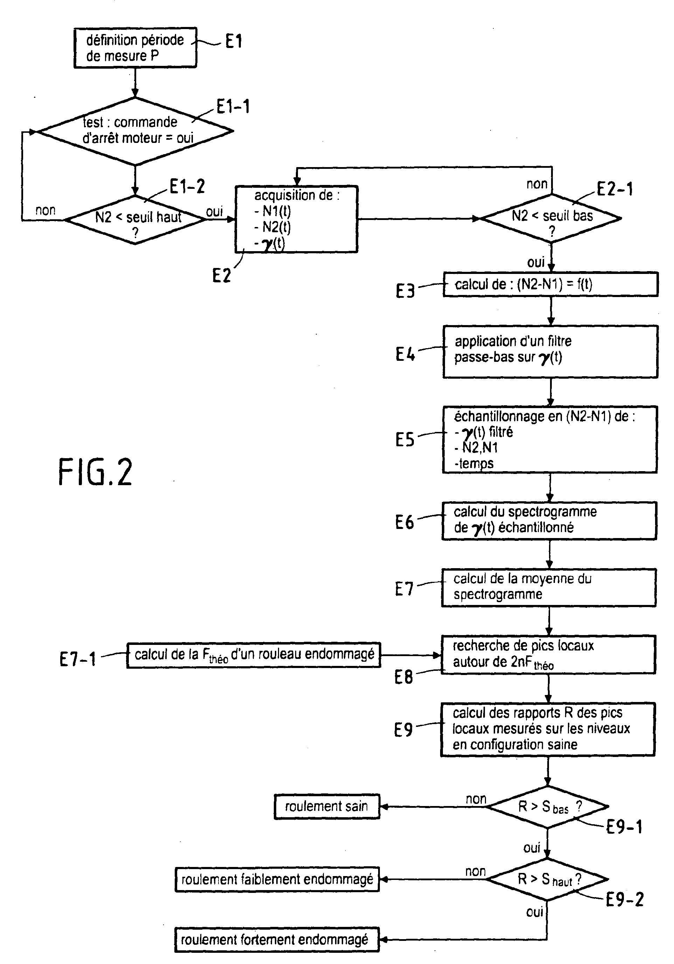

On se réfère maintenant à la figure 2 qui est un organigramme montrant un mode particulier de réalisation des différentes étapes d'un procédé conforme à l'invention.

Dans ce mode particulier, il est considéré le cas de la détection d'un endommagement d'un roulement à rouleaux d'un palier inter-arbres d'une turbomachine aéronautique. Par exemple, un tel palier inter-arbres supporte en rotation un arbre rotatif du corps basse-pression par rapport à un arbre rotatif du corps haute-pression de la turbomachine.

Dans le cas d'une turbomachine, la présente invention pourrait également s'appliquer à la détection de l'endommagement d'un roulement à billes ou à rouleaux d'un palier supportant en rotation un seul arbre rotatif par rapport à un stator.

Par ailleurs, le mode particulier de réalisation du procédé conforme à l'invention décrit ci-après s'applique à la phase d'arrêt de la turbomachine qui est une phase renouvelable et à bas régime de fonctionnement. Le procédé pourrait aussi s'appliquer à toute autre phase renouvelable à bas régime de fonctionnement de la turbomachine (comme la phase de démarrage par exemple).

Pour la suite de la description, on définit par N1 et N2 les régimes temporels de rotation respectivement de l'arbre basse-pression et de l'arbre haute-pression de la turbomachine qui sont supportés par le palier.

La première étape (E1) du procédé conforme à l'invention consiste à définir la période de mesure P correspondant à un intervalle de régimes de rotation de l'un des deux arbres de la turbomachine pendant la phase d'arrêt de celle-ci.

Pour une turbomachine, la période de mesure P est définie en fonction du régime de rotation N2 de l'arbre haute-pression et l'intervalle de régimes de rotation est borné entre un seuil bas de l'ordre de quelques centaines de tours/minute et un seuil haut de l'ordre de quelques milliers de tours/minute.

L'étape suivante (E2) consiste à acquérir sur l'ensemble de la période de mesure P des signaux numériques représentatifs des régimes de rotation N1, N2 des arbres basse et haute pression et un signal numérique vibratoire $\gamma(t)$ d'accélération de composants de la turbomachine.

La mesure des régimes de rotation N1 et N2 est réalisée à l'aide de capteurs de vitesse placés sur ces arbres (tels que des tachymètres numériques par exemple). Quant au signal vibratoire $\gamma(t)$, il peut provenir par exemple d'un capteur d'accélération placé sur un composant fixe de la turbomachine pour aider, comme il est d'usage, à équilibrer la soufflante de la turbomachine. Les signaux numériques provenant des capteurs de vitesse et d'accélération sont envoyés vers un ordinateur ayant des logiciels adéquats pour traiter ce type de signaux.

Dans la pratique, l'acquisition du signal vibratoire $\gamma(t)$ commence une fois qu'un test de commande d'arrêt de la turbomachine s'est révélé positif (étape E1-1) et que le régime de rotation N2 de l'arbre haute-pression devient inférieur au seuil haut défini pour la période de mesure P (étape E1-2). L'acquisition du signal vibratoire $\gamma(t)$ s'arrête dès que le régime de rotation N2 de l'arbre haute-pression devient inférieur au seuil bas préalablement défini (étape E2-1).

L'étape suivante (E3) consiste à effectuer au moyen d'un logiciel adéquat un calcul de la fonction f(t) qui correspond à la différence entre le régime de rotation N2 de l'arbre haute-pression et le régime de rotation N1 de l'arbre basse-pression en fonction du temps. Cette fonction f(t) est destinée à calculer la fréquence de coupure d'un filtre passe-bas appliqué à une étape ultérieure et à effectuer un échantillonnage des signaux.

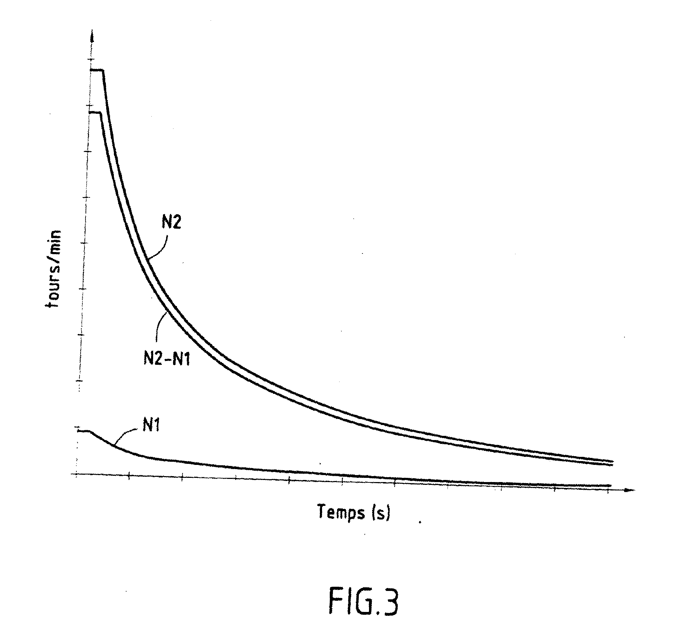

La figure 3 représente les courbes des régimes de rotation N1 et N2 des arbres basse et haute pression d'une turbomachine pendant la phase d'arrêt de celle-ci. Est également représentée sur cette figure la courbe N2-N1 correspondant à la différence f(t) entre ces régimes de rotation.

Un filtre passe-bas avec une fréquence de coupure correspondant à f(N2-N1) est ensuite appliqué au signal vibratoire $\gamma(t)$ à l'étape E4. L'application de ce filtre passe-bas permet d'éliminer une partie des fréquences fondamentales de la turbomachine et de leurs harmoniques.

L'étape suivante (E5) consiste à échantillonner en fonction de f(t) (i.e en fonction de la différence (N2-N1) de régimes de rotation des deux arbres pendant la période de mesure P) les signaux numériques suivants : le signal vibratoire $\gamma(t)$ préalablement filtré, le signal représentant le temps, et les signaux représentant les régimes de rotation N1 et N2. L'échantillonnage permet de récupérer des signaux dont la résolution en ordres du (N2 - N1) est constante.

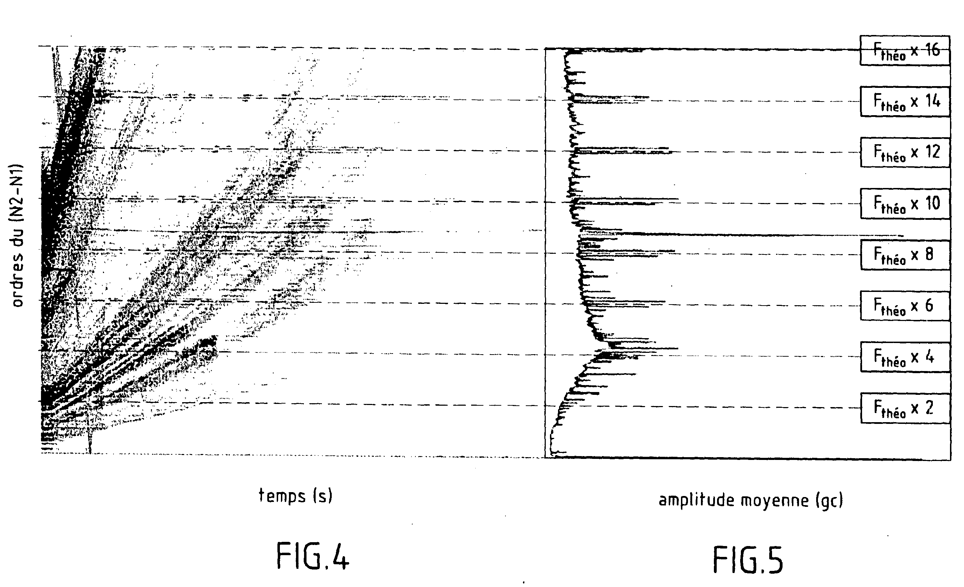

A partir d'un tel échantillonnage, l'étape suivante (E6) prévoit de transformer (par application d'une transformée de Fourier) le signal vibratoire échantillonné en un signal fréquentiel pour obtenir des raies spectrales fréquentielles ordonnées selon N2-N1. Ceci équivaut à établir un spectrogramme montrant les fréquences de vibration ordonnées selon N2-N1. La figure 4 montre un tel spectrogramme (exprimé en gc pour « g-crête ») pour une turbomachine et lorsque le régime de rotation N2 de l'arbre haute-pression chute de quelques milliers à quelques centaines de tours/minute.

Les étapes E5 et E6 d'échantillonnage de signaux et d'édition d'un spectrogramme par transformation fréquentielle sont bien connues en soi de l'homme de l'art et ne sont donc pas détaillées ici. Elles sont réalisées à l'aide d'un logiciel de calcul équipant l'ordinateur.

La moyenne des amplitudes des raies spectrales du spectrogramme est ensuite calculée à une étape E7. Sur la figure 5 est représenté le résultat d'un tel calcul de moyenne à partir du spectrogramme représenté à la figure 4. Sur cette figure 5, on remarque que les pics d'amplitude correspondent aux raies horizontales du spectrogramme. De la sorte, tout ce qui n'est pas ordonné en (N2-N1) est atténué par l'effet de moyenne, ce qui permet de mettre en évidence l'apparition de phénomènes ordonnés en N2-N1, par exemple un défaut de roulement inter-arbres.

A partir de ce calcul de moyenne et d'un calcul préalable de la fréquence théorique $F_{théo}$ d'un rouleau endommagé (étape E7-1), on détermine au cours de l'étape E8 des pics d'amplitude autour de multiples de la fréquence théorique $F_{théo}$ d'un rouleau endommagé. De tels pics d'amplitude sont caractéristiques de l'endommagement du roulement.

Les multiples de la fréquence théorique $F_{théo}$ d'un rouleau endommagé peuvent être des multiples entiers et pairs de $F_{théo}$ comme représenté sur la figure 5 (sur cette figure 5, les fréquences qui sont des multiples pairs de la fréquence théorique $F_{théo}$ sont représentées par des lignes horizontales en pointillés). Alternativement, ces multiples pourraient être des multiples non entiers et/ou des multiples impairs de la fréquence théorique.

Pour un roulement de palier inter-arbres, le calcul de la fréquence théorique F$_{théo}$ d'un rouleau endommagé est issu de la formule suivante :

$$F_{théo} = (D/(2d))(N2-N1)(1-(d/D)^2) \; ;$$

avec $\underline{D}$ pour le diamètre nominal du roulement, $\underline{d}$ le diamètre d'un rouleau et N1 et N2 les vitesses respectives de rotation des deux arbres.

De manière plus générale, les fréquences théoriques d'endommagement d'un roulement sont des fonctions qui dépendent de la géométrie du roulement, du nombre d'éléments roulants et de la vitesse de rotation des arbres. Ce type de calcul est bien connu de l'homme de l'art.

Le rapport R entre chaque pic d'amplitude ainsi déterminé et le niveau d'amplitude défini pour un roulement sain est ensuite calculé (étape E9) et ce rapport R est comparé à au moins un seuil d'endommagement prédéterminé (par exemple égal à 1) afin de déterminer si le roulement est endommagé.

A cet effet, le niveau d'amplitude pour un roulement sain est défini à partir d'une moyenne estimée avec différents moteurs sains et différentes acquisitions lors d'essais. Quant aux seuils d'endommagement, ils sont définis à partir d'essais avec le roulement endommagé ou à partir de l'expérience avec des roulements endommagés similaires à celui pour lequel les seuils doivent être définis.

Selon une disposition avantageuse de l'invention, le rapport R entre un pic d'amplitude et le niveau d'amplitude défini pour un roulement sain est d'abord comparé à un seuil bas d'endommagement S$_{bas}$ (par exemple égal à 3) à une étape E9-1, puis éventuellement comparé à un seuil haut d'endommagement S$_{haut}$ (par exemple égal à 10) à une étape E9-2. Si le rapport R est inférieur au seuil bas S$_{bas}$, le roulement est considéré comme sain. En revanche, si le rapport R est supérieur à S$_{bas}$, le roulement est considéré comme étant endommagé. Pour connaître le degré d'endommagement, le rapport R est alors comparé au seuil haut d'endommagement S$_{haut}$ : si le rapport est inférieur à S$_{haut}$, le roulement est considéré comme étant faiblement endommagé ; et si le rapport est supérieur à S$_{haut}$, le roulement est considéré comme étant fortement endommagé.

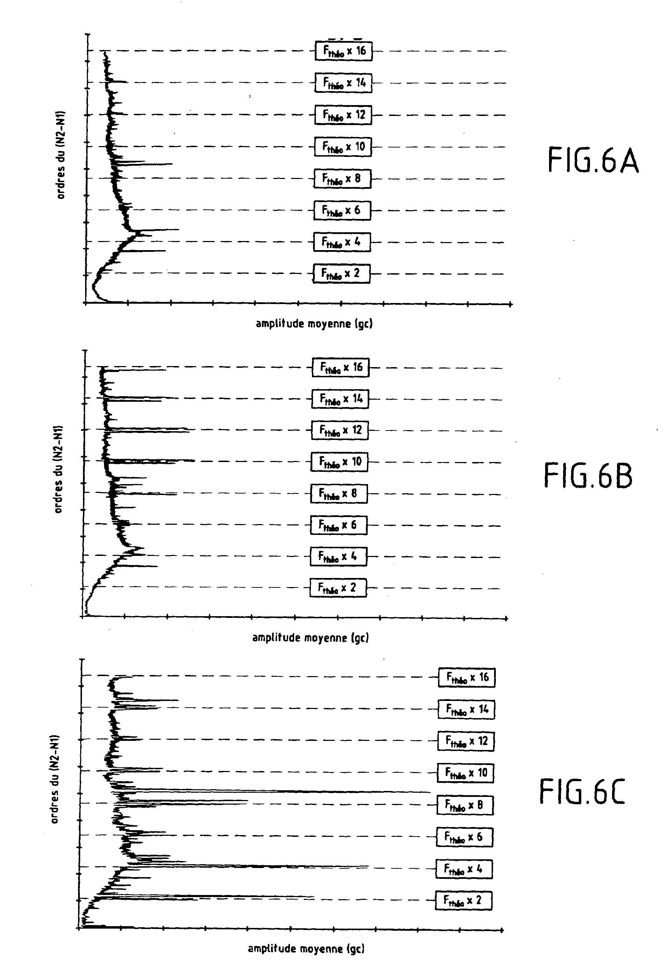

Les figures 6A à 6C illustrent l'application d'une telle disposition avantageuse. Ces figures représentent les résultats obtenus par le procédé conforme à l'invention pour un roulement endommagé à différentes étapes d'une campagne d'endurance. Elles sont similaires à la figure 5 en ce qu'elles montrent le calcul de moyenne réalisé à partir de spectrogrammes édités pour différentes étapes de la campagne d'endurance d'un palier inter-arbres d'une turbomachine selon les étapes décrites ci-dessus.

Sur la figure 6A, le rapport R$_A$ entre les pics d'amplitude des raies horizontales autour des multiples pairs de la fréquence théorique d'un rouleau endommagé et le niveau d'amplitude déterminé pour un roulement sain est inférieur au seuil bas d'endommagement S$_{bas}$. Il en résulte que le roulement ainsi analysé est considéré comme sain.

Sur la figure 6B, le rapport R$_B$ entre les pics d'amplitude et le niveau d'amplitude déterminé pour un roulement sain est supérieur au seuil bas d'endommagement S$_{bas}$ mais inférieur au seuil haut d'endommagement S$_{haut}$. Le roulement est donc considéré comme étant faiblement endommagé (on parle aussi de roulement endommagé en début de campagne d'endurance).

Enfin, sur la figure 6C, le rapport R$_C$ entre les pics d'amplitude et le niveau d'amplitude déterminé pour un roulement sain est supérieur au seuil bas d'endommagement S$_{bas}$ mais aussi au seuil haut d'endommagement S$_{haut}$. Le roulement est donc considéré comme étant fortement endommagé (on parle aussi de roulement endommagé en fin de campagne d'endurance).

Bien entendu, on pourrait envisager de comparer le rapport R à un nombre de seuils d'endommagement supérieur à deux afin d'affiner d'avantage le degré d'endommagement du roulement.

## Revendications

1. Procédé de détection d'un endommagement d'un roulement de palier supportant en rotation au moins un arbre rotatif d'un moteur, **caractérisé en qu'**il consiste à :

   a) définir (S1) une période de mesure correspondant à un intervalle de régimes de rotation de l'arbre pendant une activité renouvelable à bas régime de fonctionnement du moteur ;
   b) acquérir (S2) sur l'ensemble de la période de mesure un signal vibratoire d'accélération de composants du moteur ;
   c) échantillonner (S3) le signal vibratoire en fonction du régime de rotation de l'arbre pendant la période de mesure ;
   d) transformer (54) le signal vibratoire échantillonné en un signal fréquentiel pour obtenir des raies spectrales fréquentielles ordonnées selon le régime de rotation de l'arbre ;
   e) calculer (S5) la moyenne temporelle des amplitudes des raies spectrales sur la periode de mesure ;
   f) déterminer (56) des pics d'amplitude autour de multiples de la fréquence théorique d'un rouleau endommagé ;
   g) calculer (S7) le rapport entre chaque pic d'amplitude et le niveau d'amplitude déterminé pour un roulement sain ; et
   h) comparer (58) le rapport obtenu à au moins un seuil d'endommagement prédéterminé.

2. Procédé selon la revendication 1, dans lequel l'étape h) consiste à comparer (58) le rapport obtenu à un seuil bas d'endommagement et, si le rapport est supérieur au seuil bas, à le comparer à un seuil haut d'endommagement de façon à déterminer le degré d'endommagement éventuel du roulement.

3. Procédé selon l'une des revendications 1 et 2, dans lequel l'activité renouvelable à bas régime de fonctionnement du moteur choisie pour définir la période de mesure correspond à la phase de démarrage ou à la phase d'arrêt du moteur.

4. Procédé selon l'une quelconque des revendications 1 à 3, dans lequel le palier à roulement supporte en rotation deux arbres rotatifs du moteur ;

    - la période de mesure correspondant à un intervalle de régimes de rotation de l'un des deux arbres pendant l'activité à base régime de fonctionnement du moteur ; et
    - le signal vibratoire étant échantillonné en fonction de la différence de régimes de rotation des deux arbres pendant la période de mesure.

5. Procédé selon l'une quelconque des revendications 1 à 4, dans lequel l'étape f) consiste à déterminer (S6) des pics d'amplitude autour de multiples entiers et pairs de la fréquence théorique d'un rouleau endommagé.

**Claims**

1. A method of detecting damage to a bearing providing rotary support to at least one rotary shaft of an engine, the method being **characterized in that** it consists in:

    a) defining (S1) a measurement period corresponding to a range of speeds of rotation of the shaft during renewable activity at low speeds of operation of the engine;
    b) acquiring (S2) over the entire measurement period a vibratory signal representative of acceleration of components of the engine;
    c) sampling (S3) the vibratory signal as a function of the speed of rotation of the shaft during the measurement period;
    d) transforming (S4) the sampled vibratory signal into a frequency signal to obtain frequency spectrum lines as a function of the speed of rotation of the shaft;
    e) calculating (S5) the time average of the amplitudes of the spectrum lines over the measurement period;

    f) determining (S6) amplitude peaks around multiples of the theoretical frequency of a damaged roller;
    g) calculating (S7) the ratio between each amplitude peak and the amplitude level determined for a sound bearing; and
    h) comparing (S8) the ratio that is obtained with at least one predetermined damage threshold.

2. A method according to claim 1, wherein step h) consists in comparing (S8) the ratio that is obtained with a low-damage threshold, and if the ratio is greater than the low-damage threshold, in comparing it with a high-damage threshold in order to determine the degree to which the bearing might be damaged.

3. A method according to claim 1 or claim 2, wherein the renewable activity at low speeds of rotation of the engine selected for defining the measurement period corresponds to a stage of starting or a stage of stopping the engine.

4. A method according to any one of claims to 3, wherein the bearing supports two rotary shafts of the engine in rotation,
the measurement period corresponding to a range of speeds of rotation for one of the two shafts during the activity at low speeds of rotation of the engine; and
the vibratory signal being sampled as a function of the difference between the speeds of rotation of the two shafts during the measurement period.

5. A method according to any one of claims 1 to 4, wherein the step f) consists in determining (S6) amplitude peaks around even integer multiples of the theoretical frequency of a damaged roller.

**Patentansprüche**

1. Verfahren zum Erkennen einer Beschädigung eines Wälzlagers, das mindestens eine Drehwelle eines Motors in Drehung stützt, **dadurch gekennzeichnet, daß** es umfaßt:

    a) Definieren (S1) einer Meßperiode, die einem Intervall von Umdrehungen der Welle während einer wiederholbaren Aktivität mit niedriger Drehzahl des Motors entspricht,
    b) Erfassen (S2) eines Beschleunigungsschwingungssignals von Bauteilen des Motors über die ganze Meßperiode,
    c) Abtasten (S3) des Schwingungssignals in Abhängigkeit von der Drehzahl der Welle während der Meßperiode,
    d) Umformen (S4) des abgetasteten Schwingungssignals in ein Frequenzsignal, um Frequenzspektrallinien zu erhalten, die gemäß der Drehzahl der Welle geordnet sind,

e) Berechnen (S5) des zeitlichen Mittels der Amplituden der Spektrallinien auf der Meßperiode,

f) Bestimmen (S6) der Amplitudenspitzen um Vielfache der theoretischen Frequenz einer beschädigten Walze,

g) Berechnen (S7) des Verhältnisses zwischen jeder Amplitudenspitze und dem für ein unversehrtes Wälzlager bestimmten Amplitudeniveau, und

h) Vergleichen (S8) des erhaltenen Verhältnisses mit mindestens einem vorbestimmten Beschädigungsschwellenwert.

2. Verfahren nach Anspruch 1, bei dem der Schritt h) darin besteht, das erhaltene Verhältnis mit einem unteren Beschädigungsschwellenwert zu vergleichen (S8) und, wenn das Verhältnis größer ist als der untere Schwellenwert, mit einem oberen Beschädigungsschwellenwert derart zu vergleichen, daß der eventuelle Beschädigungsgrad des Wälzlagers bestimmt wird.

3. Verfahren nach einem der Ansprüche 1 und 2, bei dem die wiederholbare Aktivität mit niedriger Betriebsdrehzahl des Motors, die zum Definieren der Meßperiode wirt, der Startphase oder der Stopphase des Motors entspricht.

4. Verfahren nach einem der Ansprüche 1 bis 3, bei dem das Wälzlager zwei Wellen des Motors drehbar stützt,

- wobei die Meßperiode einem Intervall von Drehzahlen einer der zwei Wellen während der Aktivität mit niedriger Betriebsdrehzahl des Motors entspricht, und
- das Schwingungssignal in Abhängigkeit von dem Unterschied von Drehzahlen der zwei Wellen während der Meßperiode abgetastet wird.

5. Verfahren nach einem der Ansprüche 1 bis 4, bei dem der Schritt f) darin besteht, Amplitudenspitzen um ganz- und geradzahlige Mehrfache der theoretischen Frequenz einer beschädigten Walze zu bestimmen (S6).

Définition d'une période de mesure P — S1

↓

Acquisition d'un signal vibratoire $\gamma$(t) sur la période de mesure P — S2

↓

Echantillonnage de $\gamma$(t) en fonction de N — S3

↓

Edition d'un spectrogramme ordonné selon N — S4

↓

Calcul de la moyenne des amplitudes des raies spectrales — S5

↓

Recherche des pics d'amplitude autour de multiples de $F_{théo}$ — S6

↓

Calcul du rapport R entre chaque pic d'amplitude et le niveau d'amplitude pour un roulement sain — S7

↓

Comparaison du rapport R avec au moins un seuil d'endommagement — S8

# FIG.1

**FIG.2**

```
        ┌──────────────────────┐
        │ définition période   │──── E1
        │ de mesure P          │
        └──────────┬───────────┘
                   │
                   ▼
         ╱─────────────────────╲ ──── E1-1
        ╱  test : commande       ╲
        ╲  d'arrêt moteur = oui  ╱
         ╲───────────┬──────────╱
                     │
         ┌───────────┘
         │     E1-2 ╱─────────────╲ oui    ┌──────────────────┐          non  ╱──────────────╲ ── E2-1
    non  │         ╱ N2 < seuil haut╲──────▶│ acquisition de : │◀────────────╱  N2 < seuil bas ╲
  ◀──────┴─────────╲      ?        ╱       │ - N1(t)          │             ╲       ?         ╱
                    ╲─────────────╱        │ - N2(t)          │──────────────╲──────┬────────╱
                                           │ - γ(t)           │                     │
                                           └──────────────────┘                    │ oui
                                                 E2                                 ▼
                                                              ┌──────────────────────────────────┐
                                                        E3 ───│ calcul de : (N2-N1) = f(t)        │
                                                              └─────────────────┬──────────────────┘
                                                                                ▼
                                                              ┌──────────────────────────────────┐
                                                        E4 ───│ application d'un filtre           │
                                                              │ passe-bas sur γ(t)                │
                                                              └─────────────────┬──────────────────┘
                                                                                ▼
                                                              ┌──────────────────────────────────┐
                                                              │ échantillonnage en (N2-N1) de :   │
                                                        E5 ───│ - γ(t) filtré                     │
                                                              │ - N2,N1                           │
                                                              │ -temps                            │
                                                              └─────────────────┬──────────────────┘
                                                                                ▼
                                                              ┌──────────────────────────────────┐
                                                        E6 ───│ calcul du spectrogramme           │
                                                              │ de γ(t) échantillonné             │
                                                              └─────────────────┬──────────────────┘
                                                                                ▼
                                                              ┌──────────────────────────────────┐
                                                        E7 ───│ calcul de la moyenne du           │
                                                              │ spectrogramme                     │
                                                              └─────────────────┬──────────────────┘
                                                                                ▼
  ┌──────────────────────────────────────────┐              ┌──────────────────────────────────┐
E7-1 ─│ calcul de la F_théo d'un rouleau endommagé │──────────▶│ recherche de pics locaux          │
  └──────────────────────────────────────────┘              │ autour de 2nF_théo                │
                                                             E8 └─────────────────┬──────────────────┘
                                                                                ▼
                                                              ┌──────────────────────────────────┐
                                                              │ calcul des rapports R des pics    │
                                                        E9 ───│ locaux mesurés sur les niveaux    │
                                                              │ en configuration saine            │
                                                              └─────────────────┬──────────────────┘
                                                                                ▼
        ┌──────────────────┐    non            ╱──────────────╲
        │ roulement sain   │◀──────────────────╲   R > S_bas ? ╱
        └──────────────────┘                    ╲─────┬────────╱ ── E9-1
                                                       │ oui
                                                       ▼
        ┌──────────────────────────────┐  non  ╱──────────────╲
        │ roulement faiblement endommagé │◀─────╲  R > S_haut ? ╱
        └──────────────────────────────┘        ╲─────┬────────╱ ── E9-2
                                                       │ oui
                                                       ▼
        ┌──────────────────────────────┐
        │ roulement fortement endommagé │◀─────────────
        └──────────────────────────────┘
```

FIG.3

temps (s)

FIG.4

amplitude moyenne (gc)

FIG.5

EP 1 970 691 B1

FIG.6A

FIG.6B

FIG.6C

**EP 1 970 691 B1**

## RÉFÉRENCES CITÉES DANS LA DESCRIPTION

**Documents brevets cités dans la description**

- EP 1111364 A
- WO 02089305 A

- DE 19702234